# NEW EUROPEAN PATENT SPECIFICATION

(11) **EP 2 032 656 B2**
(45) Date of publication and mention of the opposition decision: **25.05.2016**
(45) Mention of the grant of the patent: 30.05.2012
(21) Application number: 07748565.4
(22) Date of filing: 07.06.2007
(51) Int. Cl.: C08L 97/02, C09J 103/00, C09J 103/02, C08L 3/00, C08L 3/02, C08L 39/02, C08L 79/02

(54) **ADHESIVE SYSTEM AND METHOD OF PRODUCING A WOOD BASED PRODUCT**
KLEBSTOFFSYSTEM UND VERFAHREN ZUR HERSTELLUNG EINES AUF HOLZ BASIERENDEN PRODUKTS
SYSTÈME ADHÉSIF ET PROCÉDÉ DE FABRICATION D'UN PRODUIT À BASE DE BOIS

(30) Priority: 23.06.2006 US 473963; 30.06.2006 EP 06116375
(43) Date of publication of application: 11.03.2009
(73) Proprietor: Akzo Nobel Coatings International B.V., 6800 SB Arnhem (NL)
(72) Inventor: KHABBAZ, Farideh, S-131 42 Nacka (SE); ERIKSSON, Per Anders, 131 35 Nacka (SE); FARE, Joanna, 141 38 Huddinge (SE); FURBERG, Anna Kristina, 174 46 Sundbyberg (SE)
(74) Representative: Akzo Nobel IP Department
(86) International application number: PCT/SE2007/050405
(87) International publication number: WO 2007/149037

(56) References cited:
- WO-A-02/088468
- WO-A-03/087473
- WO-A-03/102065
- WO-A2-00/01783
- DE-A1- 4 308 089
- GB-A- 1 456 629
- US-A- 3 642 671
- US-A- 6 048 929
- DATABASE WPI Week 198519 Derwent Publications Ltd., London, GB; AN 1985-112824 XP002399989 & JP 60 053578 A (KONISHI CO LTD) 27 March 1985 (1985-03-27) & DATABASE CA CHEMICAL ABSTRACTS SERVICE, COLUMBUS, OHIO, US; "Fast-curing adhesive" retrieved from STN Database accession no. 103:38348 & PATENT ABSTRACTS OF JAPAN vol. 009, no. 184 (C-294), 30 July 1985 (1985-07-30) & JP 60 053578 A (KONISHI KK), 27 March 1985 (1985-03-27)
- Dictionary.com LLC - Ausdruck aus: http://dictionary.reference.com/browse/sepa rate (28.02.2013)
- WERNER J. DIPL.-ING.: 'Stärke am Beispiel Verpackungspapiere' DAS PAPIER 2003, pages 40 - 46
- ELVERS B. ET AL: 'Ullmann's Encyclopedia of industrial chemistry', vol. A 18, 1991, VCH VERLAGSGESELLSCHAFT MBH, WEINHEIM pages 545-547 - 612-613

## Description

The present invention relates to an adhesive system and a method of producing a wood based product.

### Introduction

Formaldehyde based resins such as phenol-formaldehyde resin, melamine-formaldehyde resin and urea-formaldehyde resin are widely used as binders in the production of wood based products. Examples of such wood based products are composite products comprising layers glued together such as plywood, laminated flooring products and veneered products used in, e.g., furniture. Further examples of such wood based products are composite products such as particle-, chip- and fibreboards wherein wood chips and/or fibres, together with a binder, are pressed to form a board.

Upon curing a formaldehyde based resin, formaldehyde may be released both during the manufacture of the wood based product and also later during use of the product. Formaldehyde emission to indoor air is a major concern since many years for health reasons.

There is an increasing demand for formaldehyde-free wood adhesives which give sufficient bond strength and overall end-product quality making them suitable as alternatives to prior art adhesives containing formaldehyde based resins.

Water resistance and bond strength are generally important properties reflecting quality for the wood based products. Generally there exist specific quality parameters required for meeting an established standard for a specific end-product. For example, a particle board needs to meet certain standards in terms of, e.g., internal bonding, thickness swelling and water absorption, while a laminated flooring product generally needs to meet certain standards in terms of, e.g., delamination and fiber tear.

As an alternative to formaldehyde based resins in wood adhesive compositions starch based adhesives have been proposed. Imam et al., "Wood Adhesive from Crosslinked Poly(vinyl alcohol) and Partially Gelatinized Starch: Preparation and Properties", Starch/Stärke 51 (1999) Nr. 6, S. 225-229, discloses an adhesive composition comprising starch and polyvinyl alcohol, the composition further comprising a melamine resin. US 2,051,025, US 2,102,937, US 3,487,033, US 3,355,307 disclose starch based adhesives used for making corrugated paperboard. WO 03/069061 A1 discloses a starch based adhesive used in making a paperboard product.

WO 02/088468 discloses a method for production of fibre-containing moulded bodies made from aqueous cellulose-containing masses by means of adding the masses into or onto a mould. Modified starch is added to the aqueous masses before addition into or onto the mould, which is obtained by digestion of starch in an aqueous solution in the presence of at least one cationic polymer.

DE 4308089 discloses agents containing a polyamine, a sugar and one or more components from the group formed from dicarboxylic acid derivatives, aldehydes having two or more carbon atoms and epoxides. The agents may be used for the preparation of binders for gluing wood.

Starch based adhesive systems have so far not been used in particle board manufacturing processes.

There is still a need for alternative starch based adhesive systems suitable for producing wood based products, such as laminated products or particle boards.

Accordingly, the present invention provides a method of producing a wood based product and it also provides an adhesive system.

### The invention

The present invention relates to a method of producing a wood based product, comprising applying an adhesive system onto one or more pieces of a wood-based material, and joining the one or more pieces with one or more further pieces of a material, preferably wood based material, the adhesive system comprises one component comprising starch and another component comprising one or more polymers (P) containing an amine group or an amide group, the two components are applied onto the wood based material as separate components. The two components are suitably applied in a sequence of time from each other. Alternatively, the two components are suitably applied simultaneously onto the wood based material.

By the term "adhesive system" is herein meant a combination of components which function as, and is intended to be used as, an adhesive when combined.

In the term "adhesive" is herein also included the term "binder".

By the term "amide group" is herein included formamide group.

By wood-based materials is herein, beside solid wood, also included wooden materials such as fibre-, chip-, and particleboard materials. The surfaces to be joined may be of the same or different type of wood based material.

The wood based material can be any type and form of wood based material such as chips, fibres, sheets, laminas, veneers, pieces etc.

The present invention also relates to an adhesive system according to claim 14.

The present invention also relates to the use of the adhesive system according to the invention for producing a wood based product.

The component comprising starch may comprise a starch solution or dispersion, or comprise the starch as a solid material. The component comprising the one or more polymers (P) may comprise a solution or dispersion or comprise the polymer (P) as a solid material. Preferably the one or more polymers (P) are comprised in a solution or dispersion.

The components of the adhesive system are preferably applied onto the wood based material in a sequence of time from each other, as a first component applied and as a second component applied onto the wood based material.

In one embodiment, a first applied component, if being a solution or dispersion, is dried after application before the second component is applied.

In one embodiment the first component of the adhesive system applied onto the wood based material suitably comprises starch and the second component applied suitably comprises the one or more polymers (P). The first component applied suitably comprises a starch solution or dispersion and the second component applied suitably comprises a solution or dispersion of the one or more polymers (P).

In one embodiment, the first component applied comprising starch is suitably dried after application and before the second component applied comprising the one or more polymers (P) is applied.

In one embodiment, the first component applied suitably comprises solid starch and the second component applied suitably comprises a solution or dispersion of the one or more polymers (P).

In one embodiment, the first component of the adhesive system applied onto the wood based material suitably comprises the one or more polymers (P) and the second component applied suitably comprises starch. The first component applied suitably comprises a solution or dispersion of the one or more polymers (P) and the second component applied comprises starch, either as a solution or dispersion, or as a solid material.

In one embodiment, the first component comprising the one or more polymers (P) is suitably dried after application and before the second component comprising starch is applied.

The solid starch used in the present invention is suitably a powder and may have various moisture contents.

The weight ratio starch to the one or more polymers (P) is suitably from about 1:2 to about 100:1, preferably from about 1:1 to about 50:1, most preferably from about 2:1 to about 20:1.

The one or more polymers (P) are suitably present in an aqueous composition comprising from about 0.1 to about 99 weight % of polymer (P), preferably from about 1 to about 80 weight %, more preferably from about 3 to about 50 weight % most preferably from about 5 to about 20 weight %.

In one embodiment, the method comprises a method of producing a laminated or veneered product, the method suitably comprises applying the adhesive system according to the invention onto a sheet-like material, such as a lamina, board, veneer, or the like, and joining it with a further sheet-like material.

In one embodiment, the method comprises a method of producing a composite product wherein the pieces of wood based material are wood chips, in which the term "wood chips" herein includes chips, shavings, flakes, sawdust particles and any similar finely divided wood based material. The composite product is suitably a chip-, particle- or fibre board, or an oriented strand board. The method comprises applying the adhesive system onto chips of a wood-based material, and joining the chips. The method suitably comprises mixing wood based chips with the adhesive system, forming a mixture of chips and adhesive system, and pressing the same into a board

The weight ratio one or more polymers (P) to chips is suitably from about 1:500 to about 1:5, preferably from about 1:100 to about 1:10, most preferably from about 1:50 to about 1:20.

The moisture content of the chips before mixing with the one or more polymers (P) is suitably from 0 to about 30 weight %, preferably from 0 to about 10 weight %, most preferably from 0 to about 5 weight %.

The moisture content of the mixture of chips and adhesive system at the beginning of the pressing is suitably from about 3 to about 25 weight %, preferably from about 5 to about 20 weight %, more preferably from about 7 to about 15 weight %, most preferably from about 7 to about 12 weight %.

Examples of suitable starches are native starches and modified starches made from, e.g., potato, corn, wheat, rice, peas etc., such as: acetylated degraded starch, alkyl succinic acid modified starch, oxidated starch, hydroxypropylated starch, cationic starch, amylopectin starch, high amylose acetylated starch, tapioka starch, native potato starch, native corn starch, native wheat starch, native rice starch, and, native pea starch.

The one or more polymers (P) suitably comprise monomer units containing an amine or an amide group. Suitably, from about 5 to about 100 % of the monomer units in the one or more polymers (P) contain an amine or an amide group, preferably from about 25 to about 100 %, more preferably from about 50 to about 100 %, even more preferably from about 90 to about 100 %. Most preferably all of the monomer units in the one or more polymers (P) contain an amine or an amide group.

The one or more polymers (P) suitably contain a primary amine group or an amide group. The one or more polymers (P) preferably comprise one or more of polyvinyl amine, poly(vinylalcohol-co-vinyl amine), poly(vinylalcoholco- vinylformamide), polyallylamine, polyethylene imine, polyamidoamine and polyvinyl formamide. More preferably the one or more polymers (P) comprise one or more of polyvinyl amine and poly(vinylalcohol-covinylamine). Most preferably polymer (P) is polyvinyl amine.

In one embodiment, the one or more polymers (P) suitably belong to the group of vinyl polymers. In such a case, the one or more polymers (P) preferably comprise one or more of polyvinyl amine, poly(vinylalcohol-covinylamine), poly(vinylalcohol-co-vinylformamide), polyallyl amine, and polyvinyl formamide. More preferably the one or more vinyl polymers (P) contain a primary amine group. Most preferably vinyl polymer (P) is polyvinyl amine.

In one embodiment, the one or more polymers (P) suitably contain primary amino groups or pendant amide groups. The one or more polymers (P) preferably comprise one or more of polyvinyl amine, poly(vinylalcohol-co-vinyl amine), poly(vinylalcohol-co-vinylformamide), polyallylamine, polyethylene imine and polyvinyl formamide. Most preferably polymer (P) is polyvinyl amine or polyethylene imine.

Polyvinyl amine is usually made by hydrolysing polyvinyl formamide to a certain degree. By "polyvinyl amine" is herein meant a polyvinyl amine wherein the mole ratio of amine groups to formamide groups is from 5:95 to 100:0. If the mole ratio of amine groups to formamide groups is less than 5:95 the polymer is defined as a polyvinyl formamide. The mole ratio of amine groups to formamide groups in the polyvinyl amine is preferably from about 10:90 to about 100:0, more preferably from about 50:50 to about 100:0, most preferably from about 80:20 to about 100:0.

Poly(vinyl alcohol-co-vinyl amine) is usually made by co-polymerising vinyl acetate and vinyl formamide followed by hydrolysis which gives a co-polymer having vinyl alcohol and vinyl amine units. There may also be remaining formamide groups in the co-polymer and also remaining acetate groups. The mole ratio of amine groups to formamide groups in the poly(vinyl alcohol-co-vinyl amine) is from 5:95 to 100:0. If the number ratio of amine groups to formamide groups is less than 5:95 the polymer is defined as a poly(vinyl alcohol-co-vinyl formamide). The mole ratio of hydroxyl groups to acetate groups in the poly(vinyl alcohol-co-vinyl amine) or poly(vinyl alcohol-co-vinyl amide) is suitably from about 25: 75 to 100:0, preferably from about 75:25 to 100:0. The mole ratio of amine and formamide groups to hydroxyl and acetate groups in the poly(vinyl alcohol-co-vinyl formamine) or poly(vinyl alcohol-co-vinyl formamide) is suitably from about 3: 97 to about 100:0, preferably from about 10:90 to about 100:0, most preferably from about 25:75 to about 100:0.

The one or more polymers (P) have suitably a weight average molecular weight of from about 1.000 to about 1.000.000 g/mol, preferably from about 10.000 to about 800.000 g/mol, more preferably from about 20.000 to about 600.000 g/mol, most preferably from about 50.000 to about 500.000 g/mol.

The adhesive system may also be combined with a further composition, suitably an adhesive composition, based on a dispersion of a polymer or copolymer of one or more ethylenically unsaturated monomers. Examples of suitable polymers or copolymers of one or more ethylenically unsaturated monomers are vinyl ester homopolymers such as polyvinyl acetate, copolymers of vinylesters such as ethylene-vinyl acetate copolymer (EVA) or copolymers of vinylacetate with acrylic monomers such as methylmethacrylate or butylacrylate, styrene-butadiene rubber (SBR), and polyacrylates.
In this case, the amount of starch based adhesive is suitably from about 10 to about 99 weight %, preferably from about 25 to about 85 weight %, most preferably from about 50 to about 75 weight %, based on the total of wet adhesive system components.

The adhesive system may also be combined with a cross-linker shortly before use. Suitable cross-linkers are those which are reactive to amino and/or hydroxyl groups. Examples of crosslinkers are: isocyanates, monomers or polymers containing adipic acid, melamine formaldehyde resin, urea formaldehyde resin, melamine salts, aldehydes such as glutaraldehyde, glyoxal, and polymeric aldehydes such as dialdehyde starches, and, complexing agents such a zirconium salts. It may be added to any of the two components of the adhesive system. If used, the amount of the cross-linker in a component of the adhesive system is suitably up to about 30 weight %, or from about 0.1 to about 30 weight%.

The adhesive system further comprises one or more polymers (P1) containing acetoacetoxy groups. The content of acetoacetoxy groups in the one or more polymers (P) is suitably from about 0.05 to about 15 mole%, preferably from about 1 to about 10 mole %. The one or more polymers (P1) preferably comprise acetoacetylated polyvinyl alcohol (AAPVA).

The one or more polymers (P1) have suitably a weight average molecular weight of from about 1.000 to about 5.000.000 g/mol, preferably from about 10.000 to about 2000.000 g/mol.

The one or more components of the adhesive system comprising starch, polymer (P) and polymer (P1) respectively may further comprise additives such as viscosity adjusting agents and fillers such as kaolin, wheat meal, soy meal, walnut shell meal, or other known to be suitable for use in wood adhesive formulations.

The component of the adhesive system comprising the one or more polymers (P) or (P1) may also comprise inorganic- or organic salts. A part of the one or more polymers (P) may be ionically charged, preferably cationically charged. The amount of negative counter-ions of the salts in the component comprising the one or more polymers (P) can be from 0 to about 30 weight %, or from about 0.1 to about 20 weight %, or from about 0.5 to about 10 weight %.

In one embodiment of the method the first component applied comprises starch, the second component applied comprises a solution or dispersion of the one or more polymers (P) and the third component applied comprises a solution or dispersion of the one or more polymers (P1). The first component applied is suitably a solid starch material.

In one embodiment of the method the first component applied comprises a solution or dispersion of the one or more polymers (P), the second component applied comprises a solution or dispersion of the one or more polymers (P1) and the third component applied comprises starch, either as a solution or dispersion, or as a solid material.

The pressing suitably takes place at an elevated temperature. The pressing temperature depends on which wood based product intended to be manufactured but is suitably from about 50 to about 250 °C, preferably from about 100 to about 225°C, most preferably from about 150 to about 200°C.

The pressing time and pressing temperature are linked so that lower pressing temperatures generally require longer pressing times. The wood based product to be produced does also determine suitable pressing temperatures and pressing times. The pressing time is suitably at least about 10 s , also suitably from about 10 s to about 60 minutes, preferably at least about 30 s, also preferably from about 30 s to about 30 minutes, most preferably at least about 1 minute, also preferably from about 1 to about 15 minutes.

The wood based product produced by the method of the invention is suitably a laminated or veneered material, such as laminated flooring, veneered flooring, a veneered furniture material, plywood, a wall panel, a roofing panel, a laminated beam, or a composite product such as a particle board, fibre board, chip board or oriented strand board. Preferably, it is plywood, a veneered furniture material, veneered flooring, laminated flooring or a particle board.

In one embodiment, the wood based product produced by the method of the invention comprises one or more layers, joined with one or more adhesive joints comprising starch and one or more polymers (P) containing an amide group or an amide group.

In one embodiment, the wood based product produced by the method of the invention comprises a composite product comprising wood based chips joined together with an adhesive comprising starch and one or more polymers (P) containing an amide group or an amide group groups. The composite product suitably comprises from about 70 to about 98 weight %, preferably from about 80 to about 90 weight %, of wood based material, from about 2 to about 25 weight %, preferably from about 5 to about 15 weight %, of starch, and from about 0.5 to about 10 weight %, preferably from about 2 to about 6 weight % of the one or more polymers (P), the amounts calculated as dry weight of the composite product.

The composite product is preferably a chip-, particle- or fibre board, or an oriented strand board.

The invention is further illustrated by means of the following non-limiting examples. Parts and percentages relate to parts by weight respectively percent by weight, unless otherwise stated.

### Examples

### Example 1:

A particle board was manufactured by mixing 864 g wood chips, having a moisture content of 2 weight %, with 205 g of a 11 weight % polyethylene imine solution (Polymin® SK, from Basf), followed by mixing in 85.3 g of corn starch (C*Gum NC 03432 from Cerestar, 10% moisture content). The chips mixture was pressed into a board of 16 mm thickness. The pressing was made at 189°C during three minutes. The sequence of pressure was 160 kg/cm² during 30 s, 40 kg/ cm² during 2.5 min and no pressure during the last 30 s.

The tensile strength (internal bond, IB) was measured by gluing pieces of 5 x 5 cm onto two metal blocks and tearing them apart. Thickness swelling (TSW) and water absorption (ABS) were also measured. Thickness swelling was measured by determining the degree of swelling after a piece of 5 x 5 cm had been immersed in water (20°C, 24 hrs). Water absorption was measured by determining the weight increase after a piece of 5 x 5 cm had been immersed in water (20°C, 24 hrs).

The IB value was 190 kPa, TSW 35% and ABS (24 h) was 136%.

### Example 2:

Particle boards were manufactured in a smaller scale by mixing 50.7 g wood chips respectively, having a moisture content of 2 weight %, with 10.9 g of an aqueous solution of about 4 weight % (11 weight % including salts) polyvinyl amine (Lupamin® 9095 from Basf), followed by mixing in 5 g and 10 g respectively of corn starch (C*Gum NC 03432 from Cerestar, 10% moisture content). The chips mixtures were pressed into boards of 10 mm thickness. The pressing was made at 9 kg/cm² at 180-185°C during 5 minutes. The internal bond strength (IB) was measured by gluing pieces of 5 x 5 cm onto two metal blocks and tearing them apart.

As a reference two boards were made in the same way but instead of using a polyvinyl amine solution, 10.9 g of water was added instead.

**Table 4.**

| Wood chips (g) | Starch (g) | Polyvinyl amine (4 weight%) (g) | Moisture content of board (%) | IB (kPa) |
|---|---|---|---|---|
| 50.7 | 5 | 10.9 | 16.8 | 657 |
| 50.7 | 10 | 10.9 | 16.8 | 613 |
| 50.7 | 5 | - | 16.8 | 129 |
| 50.7 | 10 | - | 16.8 | 127 |

## Claims

1. Method of producing a wood based product, comprising applying an adhesive system onto one or more pieces of a wood-based material being solid wood or wooden material, and joining the one or more pieces with one or more further pieces of a material, the adhesive system comprises one component comprising starch and another component comprising one or more polymers (P) containing an amine group or an amide group, the two components are applied onto the wood based material as separate components.

2. Method according to claim 1, wherein the two components are applied in a sequence of time from each other, as a first component applied and as a second component applied onto the wood based material.

3. Method according to claim 2, wherein the first component applied comprises the one or more polymers (P) and the second component applied comprises starch.

4. Method according to claim 3, wherein the first component applied comprising the one or more polymers (P) is dried after application and before the second component comprising starch is applied.

5. Method according to any one of claims 1-4 wherein the weight ratio starch to the one or more polymers (P) is from about 1:2 to about 100:1.

6. Method according to any one of claims 1-5 wherein the weight ratio starch to the one or more polymers (P) is from about 2:1 to about 20:1.

7. Method according to any one of claims 1-6, comprising mixing wood based chips with the adhesive system, and joining the chips.

8. Method according to any one of claims 1-7, wherein the wood based product is a chip-, particle-, or fibre board, or an oriented strand board.

9. Method according to any one of claims 1-6, comprising applying the adhesive system onto a sheet-like material, and joining it with a further sheet-like material.

10. Method according to claim 7, wherein the weight ratio one or more polymers (P) to chips is from about 1:100 to about 1:10.

11. Method according to any one of claims 1-10 wherein the one or more polymers (P) comprises a primary amine group or an amide group.

12. Method according to any one of claims 1-11 wherein the one or more polymers (P) belong to the group of polyvinyl amine, poly(vinylalcohol-co-vinyl amine), poly(vinylalcohol-co-vinylformamide), polyallylamine, polyethylene imine and polyvinyl formamide.

13. Method according to any one of claims 1-12 wherein the adhesive system comprises one or more polymers (P1) comprising acetoacetoxy groups.

14. Adhesive system comprising one component comprising starch and another component comprising one or more polymers (P) containing an amine group or an amide group, the two components being present as unmixed separate components, and wherein the adhesive system comprises one or more polymers (P1) comprising acetoacetoxy groups.

15. Adhesive system according to claim 14, wherein the weight ratio starch to the one or more polymers (P) is from about 1:2 to about 100:1.

16. Adhesive system according to any one of claims 14 or 15, wherein the weight ratio starch to the one or more polymers (P) is from about 2:1 to about 20:1.

17. Adhesive system according to any one of claims 14-16, wherein the one or more polymers (P) comprises a primary amine group or an amide group.

18. Adhesive system according to any one of claims 14-17, wherein the one or more polymers (P) belong to the group of polyvinyl amine, poly(vinylalcohol-co-vinyl amine), poly(vinylalcohol-co-vinylformamide), polyallylamine, polyethylene imine and polyvinyl formamide.

19. Use of an adhesive system according to any of claims 14-18 for producing a wood based product.

## Patentansprüche

1. Verfahren zur Herstellung eines Produkts auf der Basis von Holz, umfassend Auftragen eines Klebstoffsystems auf ein oder mehrere Stücke eines Materials auf der Basis von Holz seiend Massivholz oder Holzmaterial, und Zusammenfügen des einen oder der mehreren Stücke mit einem oder mehreren weiteren Stücken eines Materials, wobei das Klebstoffsystem eine Komponente umfassend Stärke und eine andere Komponente umfassend ein oder mehrere Polymere (P), welche einen Aminrest oder einen Amidrest enthalten, umfasst, wobei die beiden Komponenten auf das Material auf der Basis von Holz als separate Komponenten aufgetragen werden.

2. Verfahren gemäß Anspruch 1, wobei die zwei Komponenten in einer Zeitabfolge nacheinander als eine erste aufgetragene Komponente und als eine zweite aufgetragene Komponente auf das Material auf der Basis von Holz aufgetragen werden.

3. Verfahren gemäß Anspruch 2, wobei die erste aufgetragene Komponente das eine oder die mehreren Polymere (P) und die zweite aufgetragene Komponente Stärke umfasst.

4. Verfahren gemäß Anspruch 3, wobei die erste aufgetragene Komponente, welche das eine oder die mehreren Polymere (P) umfasst, nach dem Auftragen getrocknet wird bevor die zweite Komponente, welche Stärke umfasst, aufgetragen wird.

5. Verfahren gemäß einem der Ansprüche 1-4, wobei das Gewichtsverhältnis Stärke zu dem einen oder den mehreren Polymeren (P) von etwa 1:2 bis etwa 100:1 beträgt.

6. Verfahren gemäß einem der Ansprüche 1-5, wobei das Gewichtsverhältnis Stärke zu dem einen oder den mehreren Polymeren (P) von etwa 2:1 bis etwa 20:1 beträgt.

7. Verfahren gemäß einem der Ansprüche 1-6, umfassend Mischen von Spänen auf der Basis von Holz mit dem Klebstoffsystem und Zusammenfügen der Späne.

8. Verfahren gemäß einem der Ansprüche 1-7, wobei das Produkt auf der Basis von Holz eine Span- (chip-), Holzspan- (particle-) oder Faserplatte (fibre board), oder eine Grobspanplatte (oriented strand board) ist.

9. Verfahren gemäß einem der Ansprüche 1-6, umfassend Auftragen des Klebstoffsystems auf ein flächenförmiges Material, und Zusammenfügen desselben mit einem weiteren flächenförmigen Material.

10. Verfahren gemäß Anspruch 7, wobei das Gewichtsverhältnis des einen oder der mehreren Polymere (P) zu Spänen von etwa 1:100 bis etwa 1:10 beträgt.

11. Verfahren gemäß einem der Ansprüche 1-10, wobei das eine oder die mehreren Polymere (P) einen primären Aminrest oder einen Amidrest umfassen.

12. Verfahren gemäß einem der Ansprüche 1-11, wobei das eine oder die mehreren Polymere (P) zu der Gruppe aus Polyvinylamin, Poly(vinylalkohol-co-vinylamin), Poly(vinylalkohol-co-vinylformamid), Polyallylamin, Polyethylenimin und Polyvinylformamid gehören.

13. Verfahren gemäß einem der Ansprüche 1-12, wobei das Klebstoffsystem ein oder mehrere Polymere (P1), umfassend Acetacetoxyreste, umfasst.

14. Klebstoffsystem, umfassend eine Komponente, umfassend Stärke und eine andere Komponente, umfassend ein oder mehrere Polymere (P), welche einen Aminrest oder einen Amidrest enthalten, wobei die zwei Komponenten als unvermischte, separate Komponenten vorliegen, und wobei das Klebstoffsystem ein oder mehrere Polymere (P1), umfassend Acetacetoxyreste, umfasst.

15. Klebstoffsystem gemäß Anspruch 14, wobei das Gewichtsverhältnis Stärke zu dem einen oder den mehreren Polymeren (P) von etwa 1:2 bis etwa 100:1 beträgt.

16. Klebstoffsystem gemäß einem der Ansprüche 14 oder 15, wobei das Gewichtsverhältnis Stärke zu dem einen oder den mehreren Polymeren (P) von etwa 2:1 bis etwa 20:1 beträgt.

17. Klebstoffsystem gemäß einem der Ansprüche 14-16, wobei das eine oder die mehreren Polymere (P) einen primären Aminrest oder einen Amidrest umfassen.

18. Klebstoffsystem gemäß einem der Ansprüche 14-17, wobei das eine oder die mehreren Polymere (P) zu der Gruppe aus Polyvinylamin, Poly(vinylalkohol-covinylamin), Poly(vinylalkohol-co-vinylformamid), Polyallylamin, Polyethylenimin und Polyvinylformamid gehören.

19. Verwendung eines Klebstoffsystems gemäß einem der Ansprüche 14-18 zur Herstellung eines Produkts auf der Basis von Holz.

## Revendications

1. Procédé de production d'un produit à base de bois, comprenant l'application d'un système adhésif sur un ou plusieurs morceaux d'un matériau à base de bois étant du bois massif ou du matériau bois, et la liaison du ou des plusieurs morceaux avec un ou plusieurs autres morceaux d'un matériau, le système adhésif comprenant un composant comprenant de l'amidon et un autre composant comprenant un ou plusieurs polymères (P) contenant un groupe amine ou un groupe amide, les deux composants étant appliqués sur le matériau à base de bois sous forme de composants séparés.

2. Procédé selon la revendication 1, dans lequel les deux composants sont appliqués en séquence l'un par rapport à l'autre, sous forme d'un premier composant appliqué et sous forme d'un second composant appliqué sur le matériau à base de bois.

3. Procédé selon la revendication 2, dans lequel le premier composant appliqué comprend le ou les plusieurs polymères (P) et le second composant appliqué comprend de l'amidon.

4. Procédé selon la revendication 3, dans lequel le premier composant appliqué comprenant le ou les plusieurs polymères (P) est séché après l'application et avant que le second composant comprenant de l'amidon soit appliqué.

5. Procédé selon l'une quelconque des revendications 1 à 4, dans lequel le rapport en poids de l'amidon au ou aux polymères (P) est d'environ 1:2 à environ 100:1.

6. Procédé selon l'une quelconque des revendications 1 à 5, dans lequel le rapport en poids de l'amidon au ou aux polymères (P) est d'environ 2:1 à environ 20:1.

7. Procédé selon l'une quelconque des revendications 1 à 6, comprenant le mélange de copeaux à base de bois avec le système adhésif et la liaison des copeaux.

8. Procédé selon l'une quelconque des revendications 1 à 7, dans lequel le produit à base de bois est une planche de copeaux, de particules ou de fibres ou une planche de filaments orientés.

9. Procédé selon l'une quelconque des revendications 1 à 6, comprenant l'application du système adhésif sur un matériau en feuille et la liaison de celui-ci avec un autre matériau en feuille.

10. Procédé selon la revendication 7, dans lequel le rapport en poids du ou des plusieurs polymères (P) aux copeaux est d'environ 1:100 à environ 1:10.

11. Procédé selon l'une quelconque des revendications 1 à 10, dans lequel le ou les plusieurs polymères (P) comprennent un groupe amine primaire ou un groupe amide.

12. Procédé selon l'une quelconque des revendications 1 à 11, dans lequel le ou les plusieurs polymères (P) appartiennent au groupe de la polyvinylamine, d'un copolymère de poly(alcool vinylique - vinylamine), d'un copolymère de poly(alcool vinylique - vinylformamide), de la polyallylamine, de la polyéthylèneimine et du polyvinylformamide.

13. Procédé selon l'une quelconque des revendications 1 à 12, dans lequel le système adhésif comprend un ou plusieurs polymères (P1) comprenant des groupes acétoacétoxy.

14. Système adhésif comprenant un composant comprenant de l'amidon et un autre composant comprenant un ou plusieurs polymères (P) contenant un groupe amine ou un groupe amide, les deux composants étant présents sous forme de composants séparés non mélangés, et dans lequel le système adhésif comprend un ou plusieurs polymères (P1) comprenant des groupes acétoacétoxy.

15. Système adhésif selon la revendication 14, dans lequel le rapport en poids de l'amidon au ou aux plusieurs polymères (P) est d'environ 1:2 à environ 100:1.

16. Système adhésif selon l'une quelconque des revendications 14 ou 15, dans lequel le rapport en poids de l'amidon au ou aux plusieurs polymères (P) est d'environ 2:1 à environ 20:1.

17. Système adhésif selon l'une quelconque des revendications 14 à 16, dans lequel le ou les plusieurs polymères (P) comprennent un groupe amine primaire ou un groupe amide.

18. Système adhésif selon l'une quelconque des revendications 14 à 17, dans lequel le ou les plusieurs polymères (P) appartiennent au groupe de la polyvinylamine, d'un copolymère de poly(alcool vinylique - vinylamine), d'un copolymère de poly(alcool vinylique - vinylformamide), de la polyallylamine, de la polyéthylèneimine et du polyvinylformamide.

19. Utilisation d'un système adhésif selon l'une quelconque des revendications 14 à 18 pour produire un produit à base de bois.
